# EUROPEAN PATENT APPLICATION

(11) **EP 2 704 447 A1**
(43) Date of publication of application: **05.03.2014**
(21) Application number: 13177069.5
(22) Date of filing: 18.07.2013
(51) Int. Cl.: H04N 21/442, H04L 12/26, H04L 29/08, H04N 21/262, H04N 21/488, H04N 21/647

(54) **Content-reception device**

(30) Priority: 28.08.2012 JP 2012187240
(71) Applicant: Funai Electric Co., Ltd., Daito-shi Osaka 574-0013 (JP)
(72) Inventor: Nishida, Yusuke, Osaka, Osaka 574-0013 (JP)
(74) Representative: Osha Liang SARL

(57) **Abstract**

A content-reception device (10) includes a clock-time measurement unit (15) that measures a current time, a communication unit (13) connected via a network (20) to a server (A) that operates as a content-service provider that distributes content via the network (20), a memory unit (11) that stores connection-setting information that indicates by associating a clock-time setting that indicates a plurality of connecting clock times when the communication unit (13) is connected to the server (A), and an address of the server (A), a communication-control unit (161) that connects the communication unit (13) to the server (20) based on the connection-setting information, and transfers predetermined data from the server (A) to the communication unit (13) at a time when any of a plurality of connecting clock times indicated by the clock-time setting matches the current time indicated by the clock-time measurement unit (15), a transfer-performance measurement unit (162), and a display-control unit (166).

## Description

### [Field of the Disclosure]

The present disclosure relates to content-reception devices distributed with content from servers.

### [Background Art]

At present, content-service providers (also known as CSP) that provide a variety of content via a network such as the Internet is at a popularized stage. Content handled by the CSP includes video content, such as videos and television programs, or musical content such as songs by famous artists. As disclosed in patent publications 1 - 4 below, playback of that content is generally streamed playback adopted by a client server system that uses the Internet.

When a user uses the CSP, the user's client terminal is affected by the communication environment with the CSP server. For example, when a plurality of client terminals is connected to the same server at the same time period, a burden is imposed on the server so the communication environment is degraded. This results in reduction in transfer speed of content transferred to the client terminal. For that reason, depending on a time period that the client terminal is connected to the server, low-quality playback of content transferred using a streaming method may occur, or the content may stop partway during playback.

Patent publications 1 - 4 are known, for example, as technologies that address a poor communication environment. In patent publication 1, when a client terminal requests a streaming distribution device for new distribution of content, the streaming distribution device obtains information relating to a number of the content being distributed at that time, and a number of connected client terminals. Also, the streaming distribution device judges whether content can be distributed to the client terminal based on that obtained information and notifies the judgment results to the client terminal. Still further, with patent publication 2, a content-reception device measures throughput of a transmission channel when receiving metadata, to judge whether it is possible to playback the content. Still further, with patent publication 3, a terminal at the reception side measures a transmission speed of data sent from the device at the distribution side. The device at the distribution side resets a resolution and a transmission speed of data being sent based on the measurement results. Still further, with patent publication 4, a streaming server estimates information (such as a signal-to-noise ratio SNR, for example) relating to a status of the transmission path. Also, the streaming server sets the encoding format for distributed content to control the quality of the distributed content.

### [Patent Documents]

[Patent Document 1] Japanese unexamined patent application publication 2003-179902 [Patent Document 2] Japanese unexamined patent application publication 2008-28837
[Patent Document 3] Japanese unexamined patent application publication 2007-329814
[Patent Document 4] Japanese unexamined patent application publication 2005-311599

Conventionally, however, there has been no technology for the user using the CSP to know a time period when the environment for communication with the CSP server is good. Also, it was not considered, in patent publications 1 - 4, to inform the user a good time period for the client terminal to connect to the server. For that reason, it was difficult for the user to know a time period when the environment for communication with the CSP server is good.

### [Summary of the Disclosure]

One or more embodiments of the present disclosure provide a content-reception device that informs the user of a time period when the communication environment with the content-service provider is good.

In one aspect, the present disclosure provides a content-reception device comprising: a clock-time measurement unit that measures a current time; a communication unit connected via a network to a server that operates as a content-service provider that distributes content via the network; a memory unit that stores connection-setting information that indicates by associating a clock-time setting that indicates a plurality of connecting clock times when the communication unit is connected to the server, and an address of the server; a communication-control unit that connects the communication unit to the server based on the connection-setting information, and transfers predetermined data from the server to the communication unit at a time when any of a plurality of connecting clock times indicated by the clock-time setting matches the current time indicated by the clock-time measurement unit; a transfer-performance measurement unit that measures transfer performance of the server when the predetermined data is transferred from the server to the communication unit; and a display-control unit that displays a display screen based on a measurement result of the transfer-performance measurement unit on a display device.

According to one or more embodiments, server transfer performance is measured when predetermined data is transferred from the server that operates as a content-service provider to the communication unit, for each connecting clock time indicated by the clock-time setting in the connection-setting information. Then, the display screen based on that measurement result is displayed on the display device. Therefore, it is possible to notify the user of a time period with a good communication environment with the content-service provider.

According to one or more embodiments, a plurality of time periods that include each of the connecting clock times and the transfer performance at each of the connecting clock times are displayed on the display screen.

According to one or more embodiments, the content-reception device further includes a communication-environment judging unit for judging a quality of the transfer performance measured by the transfer-performance measurement unit.

According to one or more embodiments the connection-setting information further indicates by associating, with the clock-time setting and the server address, a communication-environment threshold for classifying a quality of the transfer performance of the server to a plurality of communication-environment levels.

According to one or more embodiments, the communication-environment judging unit judges whether the transfer performance at each of the connecting clock times belongs to any of the plurality of communication-environment levels based on the communication-environment threshold indicated by the connection-setting information.

According to one or more embodiments, the display screen displays a plurality of time periods that include each of the connecting clock-times and the communication-environment level at each of the connecting clock times.

According to one or more embodiments, the communication-control unit judges whether the communication unit is communicating using the network, and transfers the predetermined data from the server to the communication unit only when it judges that communication is not being implemented using the network.

According to one or more embodiments, the clock-time setting in the connection-setting information includes: a connection-starting hour that indicates a connecting clock time when the communication unit is first connected to the server; each time interval of a plurality of connecting clock times; a setting period that indicates a period that the communication unit is connected to the server for each time interval, and the communication-control unit calculates the plurality of connecting clock times using the connection-starting hour, the time interval, and the setting period.

According to one or more embodiments, throughput that indicates a data volume per unit of time transferred from the server to the communication unit is used in the transfer performance.

According to one or more embodiments, latency that indicates a response time from a request by the communication-control unit for predetermined data from the server until the communication unit receives the predetermined data is used in the transfer performance.

Pursuant to one or more embodiments of the present disclosure, it is possible to provide a content-reception device that informs a user of a time period when a communication environment with the content service provider is good.

### [Brief Description of the Drawings]

Fig. 1 is a block diagram of a content-distribution system pursuant to one or more embodiments of the present disclosure;
Fig. 2 is a view of one example of a display screen in a time-period selection operation;
Fig. 3 is a flowchart showing the time-period selection operation according to one or more embodiments of the present disclosure;
Fig. 4 is a view of another example of a display screen in the time-period selection operation; and
Fig. 5 is a view of another example of the display screen in the time-period selection operation.

### [Detailed Description of the Disclosure]

Embodiments of the present disclosure will now be described with reference to the drawings. Constitution of a Content-Reception System

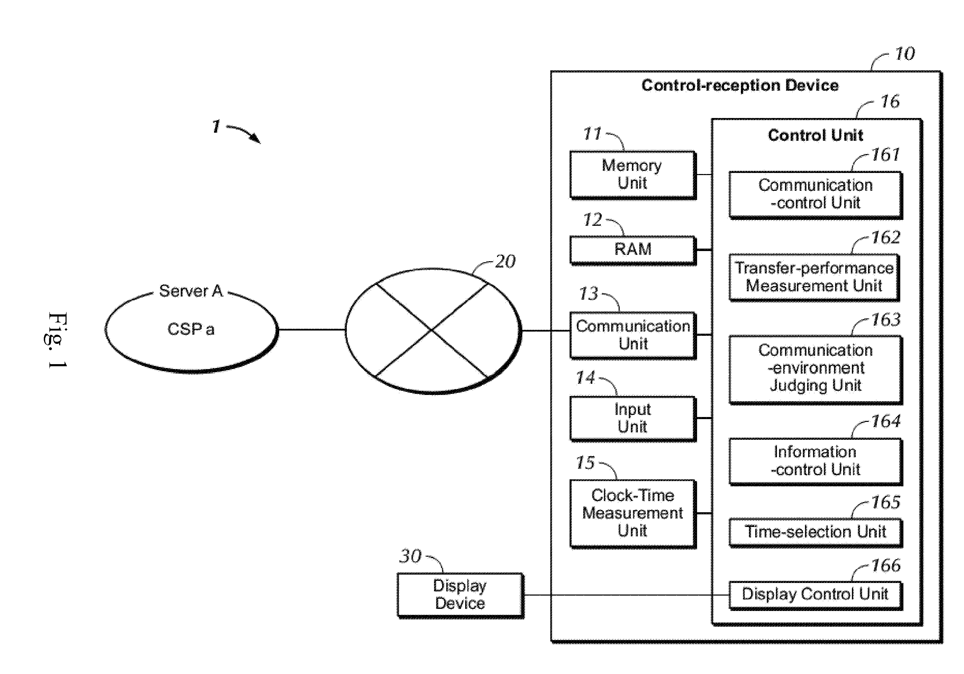

First, a content-distribution system 1 pursuant to one embodiment will be described. Fig. 1 is a block diagram of a content-distribution system 1 pursuant to one embodiment. The content-distribution system 1 may comprise a server A, a content-reception device 10, a network 20. The content-distribution system 1 may further comprises a display device 30.

Server A is, for example, a content-distribution device that operates as a content-service provider a. Hereinafter, the content-service provider is referred to as CSP (Content-Service Provider). This CSPa provides to the content-reception device 10 content services that distribute a variety of content such as video or audio content and the like, via the network 20. The network 20 may be the Internet, a wireless LAN or a wired LAN, for example.

The content-reception device 10 receives via the network 20 content from the CSPa server A contracted to receive content services. The content-reception device 10 is not particularly limited to a format for receiving the content. The content-reception device 10 may for example receive content distributed from the server A using a streaming method, or receive content transferred from the server A in a download format. Examples of the content-reception device 10 may be a recording playback apparatus such as a BD recorder or a DVD recorder or the like, an information terminal device such as a personal computer and the like, or a portable terminal device such as a portable telephone or smartphone or the like, but the content-reception device 10 it is not particularly limited to these examples.

The display device 30 may play back content distributed to the content-reception device 10. A possible example of the display device 30 may be an LCD television, but the display device 30 is not particularly limited to this example. The display device 30 may be also built into the content-reception device 10.

### Constitution of the Content-Reception Device

Next, the content-reception device 10 pursuant to one embodiment will be described. As shown in Fig. 1, the content-reception device 10 may comprise a memory unit 11, RAM 12, a communication unit 13, an input unit 14, a clock-time measurement unit 15, and a control unit 16. In addition, the content-reception device 10 may also include an external input device such as a remote controller.

The memory unit 11 may be a non-volatile memory medium. The memory unit 11 may store connection-setting information, time-period information described below, and a program used by the control unit 16 and each unit included in the control unit 16. The connection-setting information may be information a user creates or edits using the input unit 14, for example. Furthermore, the connection-setting information may be information preset such as when the content-reception device 10 is shipped from the factory. This connection-setting information may indicate by associating the clock-time setting, the communication-environment threshold, the server A address. The clock-time setting may indicate a plurality of connecting clock times that the communication unit 13 is connected to the server A. The clock-time setting may comprise, for example, a connection-starting clock time, a time interval, and a setting period. The connection-starting clock time may indicate the connecting clock time that the communication unit 13 is first connected to the server A. The time interval may indicate each hourly interval of a plurality of connecting clock times. The setting period indicates a period, in hour intervals, that the communication unit 13 is connected to the server A. Said another way, this setting period indicates a period to implement a time-period selection operation, described below. Also, the communication-environment threshold indicates one or more thresholds for transfer performance to classify qualities of server A transfer performance into a plurality of communication-environment levels.

RAM 12 may be a volatile memory medium. The communication unit 13 may be connected to the server A via the network 20 and communicate with the server A. The input unit 14 may be an input device that receives operational input for the user to give instructions to the content-reception device 10. The clock-time measurement unit 15 may measure the current time.

The control unit 16 may comprise a communication-control unit 161, a transfer-performance measurement unit 162, a communication-environment judging unit 163, an information-control unit 164, a time-selection unit 165, and a display-control unit 166. Furthermore, the control unit 16 may also comprise the clock-time measurement unit 15.

The communication-control unit 161 may control the communication unit 13. For example, the communication-control unit 161 may connect the server A and communication unit 13 indicated by the connection-setting information, and transfer various content (video content, audio content, and text content) and data and the like from the server A to the communication unit 13. Also, the communication-control unit 161 may calculate a plurality of connecting clock times from the clock-time setting in the connection-setting information stored in the memory unit. The communication-control unit 161 may judge whether the communication unit 13 is communicating using the network 20, when any one of a plurality of connecting clock times indicated by the clock-time setting in the connection-setting information matches the current time indicated by the clock-time measuring unit 15. When it is judged that communication is not being implemented using the network 20, the communication-control unit 161 may connect the communication unit 13 to the server A based on the connection-setting information, and transfer predetermined data from the server A to the communication unit 13.

The transfer-performance measurement unit 162 may measure transfer performance of the server A when predetermined data is transferred from the server A to the communication unit 13. Said another way, the transfer-performance measurement unit 162 may measure transfer performance in a communication path between the server A and the communication unit 13. Throughput that indicates a data volume per unit of time, transferred from server A via the network 20 may be used as an evaluation value of this transfer performance.

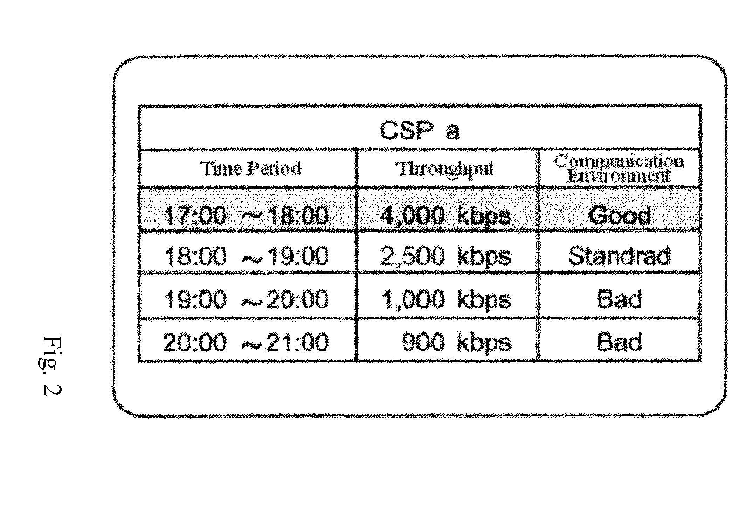

The communication-environment judging unit 163 may judge qualities of throughput measured by the transfer-performance measurement unit 162. The communication-environment judging unit 163 may classify by judging whether the throughput of the server A belongs to any one of a plurality of communication-environment levels at each connecting clock time, for example based on the communication-environment threshold indicated in the connection-setting information. (See Fig. 2, described below, for an example). This plurality of communication-environment levels may indicate qualities of the communication environment between the server A and the communication unit 13.

The information-control unit 164 may generate and update time-period information. The time-period information may indicate by associating throughput at each connecting clock time measured by the transfer-performance measurement unit 162, the CSPa on the server A, the corresponding connecting clock time (or a predetermined time period that includes this connecting clock time), and the communication-environment level judged by the communication-environment judging unit 163.

The time-selection unit 165 may reference the time-period information, and select a time period with the highest throughput of throughput on server A measured by the transfer-performance measurement unit 162 as the highest transfer performance on the server A.

The display-control unit 166 may control the display device 30. The display-control unit 166 may display a display screen, for example based on a measurement result of the transfer-performance measurement unit 162, on the display device 30. This display screen is only an example. For example, the display-control unit 166 may display in a list using a GUI (Graphical User Interface) on a display screen of the display device 30, a plurality of time periods that include each connecting clock time indicated by the connection-setting information, for example based on the time-period setting and the clock-time setting in the connection-setting information, the corresponding CSPa, and the throughput and/or communication-environment levels of each. Also, a starting clock time or an ending clock time may be set for each connecting clock time indicated by the clock-time setting in the connection-setting information, for the time period displayed in the GUI display screen, and each connecting clock time may be set to be a time substantially partway.

Fig. 2 is a view showing one example of the display screen in the time-period selection operation. The CSPa, a time period for each one hour from 17:00 to 21:00, throughput of server A measured in each time period, and a communication-environment level for each time period are displayed in a list in the display screen depicted in Fig. 2. Also, in Fig. 2, communication-environment levels are displayed in three levels, namely "Good," "Standard," and "Bad," in order of quality; the number of communication-environment levels is not particularly limited thereto. A number levels of the communication-environment level is determined by a number of thresholds of transfer performance indicated by the communication-environment threshold in the connection-setting information.

Furthermore, in the screen display shown in Fig. 2, the time period with the highest throughput (17:00 - 18:00), its throughput (4,000 kbps), and the communication-environment level (Good) are highlighted in the display. Also, this highlighted display is not particularly limited. For example, these may be displayed using colors that are different from other time periods, their throughputs and communication-environment levels. They may also be displayed with adorned characters, such as bold characters or italicized characters and the like. Conversely, these may be displayed with an underline, or with a background color that is different for other time periods, their throughputs and communication-environment levels.

Also, in Fig. 2, each time period throughput and communication-environment level is displayed in a list in time-period order, but the order of the list display is not particularly limited. This list display may be organized in high-throughput order, or in an order of measured throughput in the time-period selection operation, described below.

### Time-period Selection Operation

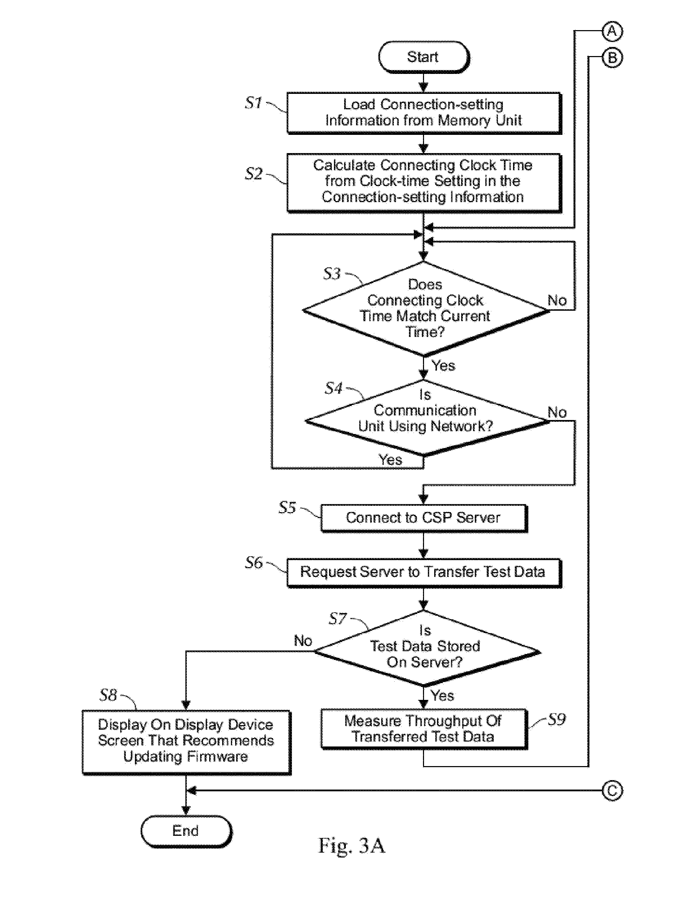

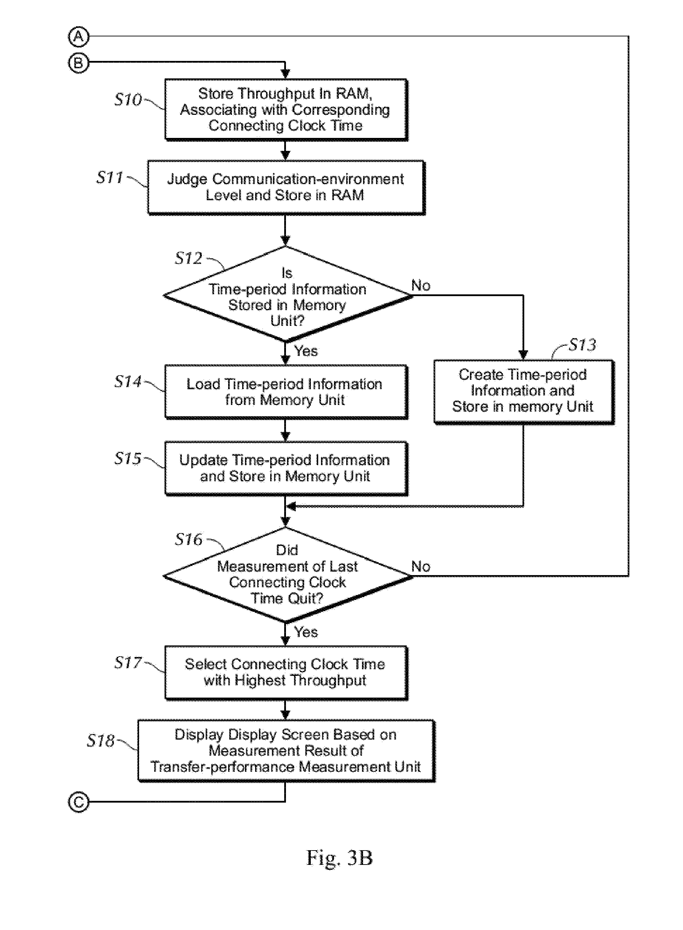

Next, the time-period selection operation for the content-reception device 10 pursuant to one embodiment will be described. In the time-period selection operation, a time period with the highest throughput of one day may be selected. Fig. 3 is a flowchart showing an example of time-period selection operation. The time-period selection operation shown in Fig. 3 may be constantly being processed in the background when the power to the content-reception device 10 is turned on (for example, when the content-reception device 10 is in an energized state).

First, the communication-control unit 161 may load connection-setting information from the memory unit 11 (step S1). The communication-control unit 161 may calculate a plurality of connecting clock times from the clock-time setting (for example, the connection-starting time, the setting period, and the time interval) indicated by the connection-setting information. (Step S2) The calculated connecting clock time may be stored in RAM 12. In the embodiment shown in Fig. 2, the clock-time starting time is set to 17:00. Also, the time interval is set to 1 hour. The setting period is set to 4 hours.

The communication-control unit 161 may judge whether any of the plurality of connecting clock times matches the current time in the clock-time measurement unit 15 (step S3). When any of the plurality of connecting clock times matches the current time (Yes at step S3), the communication-control unit 161 may further judge whether the communication unit 13 is communicating using the network 20. (step S4) When it is judged that the communication unit 13 is communicating using the network 20 (Yes at step S4), the system may return to step S3. Also, at that time, the display-control unit 166 may display on the display device 30 a notification screen to notify that the transfer performance of the server A was not measured at that connecting clock time.

Conversely, when it is judged that the communication unit 13 is not communicating using the network 20 (No at step S4), the communication-control unit 161 may connect the communication unit 13 to the server A via the network 20 (step S5). Also, the communication-control unit 161 may request the server A to transfer test data (predetermined data) from the server A to the communication unit 13 (step S6). This test data is predetermined data for measuring server A throughput when data is transferred from the server A to the communication unit 13.

When test data is not stored in the server A (No at step S7), the communication unit 13 may be notified from the server A that there is no test data. When the communication unit 13 receives this notification, the display-control unit 166 may display a predetermined notification screen on the display device 30 (step S8). Then, the time-period selection operation may end. However, a notification screen can be displayed as a predetermined notification screen, for recommending a firmware update to receive content distribution from the CSPa, for example. Also, a notification screen can be displayed to notify that distributed content cannot be received from the CSPa. Also, the timing for display of this notification screen is not particularly limited. For example, this notification screen may be displayed at any time, or at predetermined clock times, or when the content-reception device 10 changes from an idle state (the software power is turned off) to when it is started up (when the software power is turned on).

Conversely, when test data is stored in the server A (Yes at step S7), the transfer-performance measurement unit 162 may measure throughput of the server A when the test data is transferred from the server A to the communication unit 13, at each predetermined time (step S9). To describe this in more detail, the transfer-performance measurement unit 162 may calculate an average value for the data volume per unit of time for each predetermined time, using the data volume of test data transferred within a predetermined time, and that predetermined time. Then, the transfer-performance measurement unit 162 may use this average value as the throughput for the server A in the connecting clock time. In one embodiment, the predetermined time may be set to 10 - 30 seconds. However, this predetermined time can freely be set without limit to its range, according to embodiments of the present disclosure. Also, the transfer-performance measurement unit 162 may calculate throughput using the total data volume of test data and the total transfer time. The transfer-performance measurement unit 162 may store calculated throughputs in RAM 12 by associating the CSPa and corresponding connecting clock time (step S10).

Also, the communication-environment judging unit 163 may compare throughputs calculated by the transfer-performance measurement unit 162 and the communication-environment threshold indicated by the connection-setting information to classify by judging whether the transfer performance of the server A when predetermined data is transferred belongs to any of the plurality of communication-environment levels (step S11). Then, the communication-environment judging unit 163 may store the classified communication-environment level in RAM 12, associating the CSPa, the corresponding connecting clock time, and the throughputs calculated by the transfer-performance measurement unit 162.

Next, the information-control unit 164 may judge whether the time-period information is stored in the memory unit 11 (step S12). When it is determined that the time-period information is not stored in the memory unit 11 (No at step S12), the information-control unit 164 may create time-period information based on connection-setting information stored in RAM 12, throughput and the communication-environment level, and stores that created time-period information in the memory unit 11 (step S 13).

Conversely, when it is determined that the time-period information is stored in the memory unit 11 (Yes at step S12), the information-control unit 164 may store it in RAM 12 (step S 14) by loading the time-period information from the memory unit 11. Then, the information-control unit 164 may update the time-period information based on the connection-setting information stored in RAM 12, throughput and communication-environment level, and may store the updated time-period information in the memory unit 11 (step S15). At that time, the information-control unit 164 may overwrite the throughputs calculated by the transfer-performance measurement unit 162 to the time-period information or may overwrite the average value calculated using the throughput indicated by the time-period information before the update and the throughput calculated by the transfer-performance measurement unit 162 to the time-period information.

Next, the communication-control unit 161 may judge whether the connecting clock time at which throughput was measured at step S9 is a last connecting clock time indicated by the clock-time setting, by referencing the connection-setting information (step S16). When it is judged not to be the last connection-clock time (No at step S16), the communication-control unit 161 may return to step S3 to measure throughput at a next connection-clock time.

Conversely, when it is judged to be the last connection-clock time (Yes at step S16), the time-selection unit 165 may select the connection-clock time with the highest throughput at server A, based on the time-period information loaded from the memory unit 11 (step S17). Then, the display-control unit 166 may display in the GUI on the display device 30 a display screen based on the measurement result of the transfer-performance measurement unit 162 at step S9 (step S18). For example, the display-control unit 166 may display in a list the CSPa, time periods that include each connecting clock time, and their throughputs and the communication-environment levels, as shown in Fig. 2. However, the display-control unit 166 may highlight in the display device 30 the display of the time period that includes the connecting clock time selected by the time-selection unit 165, and the throughput and the communication-environment level of the connecting clock time selected by the time-selection unit 165. Then, the time-period selection operation may end.

Also, before starting the time-period selection operation, if the time-period information is stored in the previously generated memory unit 11, at step S17, the time-selection unit 165 may compare the time-period information before starting the time-period selection operation described above, and the time-period information after the update. Also, in the event that the time period that includes the connecting clock time with the highest throughput before or after the time-period selection operation changes, the display-control unit 166 may display a notice at S18 of that change on the GUI display screen (for example, see Fig. 2), and may notify the user of the change using predetermined audio.

Pursuant to the time-period selection operation , throughput of the server A may be measured when predetermined data is transferred from the server A that operates as the CSPa to the communication unit 13, at each connecting clock time indicated by the clock-time setting of the connection-setting information. Then, a display screen based on that measurement result may be displayed on the display device 30. Therefore, it is possible to notify the user of a time period with a good communication environment with the CSPa.

The present disclosure has been described above based on embodiments. These embodiments are examples; a variety of alternative embodiments are possible by combining each of its configuring elements and each process. It will be understood by a person skilled in the art that all embodiments are within the scope of the present disclosure.

(a) According to one embodiment, the content-distribution system 1 may include a communication-relay device, such as a router disposed between the content-reception device 10 and the network 20. However, one or a plurality of content-reception devices 10 may be connected to the communication-relay device via a communication path, such as a wireless LAN or a wired LAN, or the like, for example. This communication-relay device may constantly monitor whether each content-reception device 10 is communicating, and may have communication status information indicating the communicating content-reception device 10. For that reason, if the communication-control unit 161 makes the communication unit 13 receive a transfer of the communication status information by requesting the communication-relay device, it is possible to judge whether any of the content-reception devices 10 is communicating using the communication path between the communication-relay device. Also, if the communication status information is encrypted, the control unit 16 in the content-reception device 10 may be configured to include a decryption unit that decrypts encrypted communication status information.

Therefore, according to one embodiment of the present disclosure, at step S4 in the time-period selection operation, the communication-control unit 161 may judge whether each content-reception device 10 connected to the communication-relay device is communicating. In such a case, a configuration may be used where the communication-control unit 161 may connect to the server A the communication unit 13 based on the connection-setting information at step S5, and may transfer the predetermined data from the server A to the communication unit 13 at step S6, only when it is judged that all content-reception device 10 are not communicating. Doing so makes it possible for the transfer-performance measurement unit 162 to take a more precise measurement of transfer performance (for example, throughput) of server A when the predetermined data is transferred from the server A.

(b) According to this embodiment, as shown in Fig. 1, the content-distribution system 1 comprises a content-reception device 10 which is connectable to one server A via the network 20. However, the content -distribution system may comprise a plurality of servers (and their CSP) to which the content-reception device 10 may connect. Also, time periods with good communication environments may be selected for each CSP server, and the selection result may be displayed in the GUI on the display device 30. In such a case, the time-period selection operation may be implemented for each CSP server.

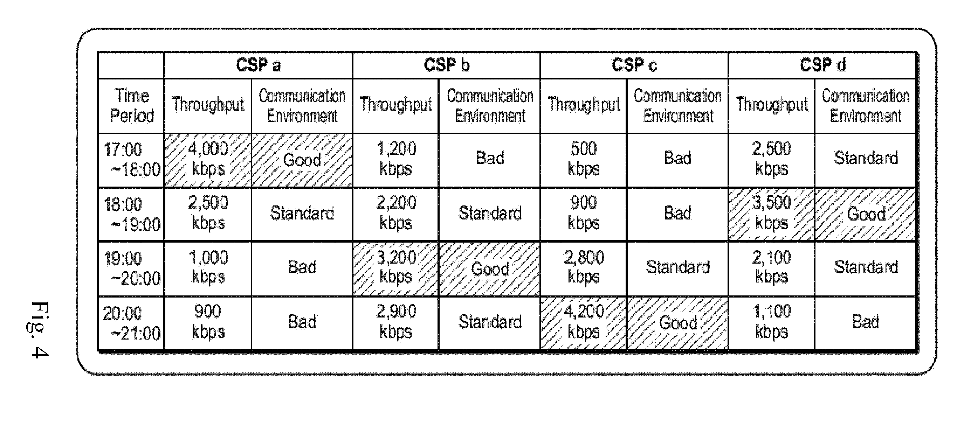

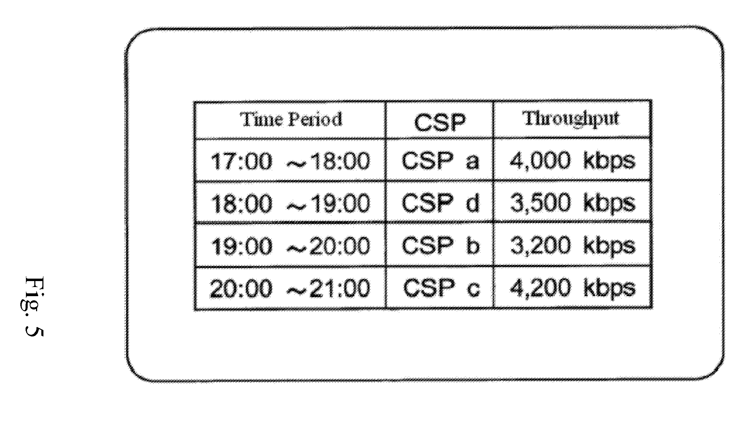

Figs. 4 and 5 are views of other examples of display screens in the time-period selection operation. In the display screen depicted in Fig. 4, time periods that include a plurality of connecting clock times indicated by the clock-time setting in the connection-setting information, throughputs for CSPa to CSPd in each time period, and the communication-environment level are displayed in a list in the GUI. Furthermore, the time periods with the highest throughputs and communication-environment levels of the server are highlighted in the display for each of the CSPa to CSPd. Also, in the screen display shown in Fig. 5, CSPs with the highest throughputs for each time period, and their throughputs are displayed in a list in the GUI. With this, it is possible to notify the user of CSPs with good communication environments in each time period. Also, although Figs. 4 and 5 show the four CSPs of CSPa to CSPd, a number of CSPs and servers is not limited thereto.

(c) According to this embodiment, as an example of a screen display for the display device 30, those depicted in Figs. 2, 4, and 5 were explained. However, items highlighted in the displays of these display screens are not particularly limited thereto. For example, a time-period that includes a connecting time that corresponds to the throughput judged by the communication-environment judging unit 163 to belong to a predetermined communication-environment level (for example, Good and the like depicted in Figs. 2 and 4) may be highlighted in the display along with its throughput and/or the communication-environment level. In such a case, it is possible to notify the user of a plurality of time periods with good communication environments with a CSP.

(d) The communication-control unit 161 may be implemented in the content-reception device 10 of this embodiment, the transfer-performance measurement unit 162, the communication-environment judging unit 163, the information-control unit 164, the time-selection unit 165, and the display-control unit 166 using different circuits for each. However, the transfer-performance measurement unit 162, the communication-environment judging unit 163, the information-control unit 164, the time-selection unit 165, and the display-control unit 166 may be implemented using one micro-computer. Conversely, the transfer-performance measurement unit 162, the communication-environment judging unit 163, the information-control unit 164, the time-selection unit 165, and the display-control unit 166 may be implemented through functionality of a program stored in the memory unit 11 that is a non-volatile memory medium.

(e) According to this embodiment, throughput may be used as an evaluation value for server A transfer performance when data is transferred from the CSPa server A to the communication unit 13, but latency may be used instead of throughput for the evaluation value for transfer performance. Latency indicates response time from a request by the communication-control unit 161 for predetermined data from the server A until the communication unit 13 receives the predetermined data. In such a case, the communication-environment judging unit 163 may classify by judging whether the latency of the server A at each connecting clock time belongs to any of a plurality of communication-environment levels, based on the communication-environment threshold indicated in the connection-setting information. Also, the time-selection unit 165 may select a connecting clock time with the shortest latency as the connecting clock time with the highest transfer performance. By doing so, the time period including the connecting clock time with the shortest latency is displayed on the display device 30, so it is possible to notify the user of a time period with a good communication environment with the CSPa.

(f) According to this embodiment, the time-period selection operation or a portion thereof (for example, steps S1 to S17 in Fig. 3) may be implemented automatically in the background of a preset time period for each predetermined period set in any unit of days, weeks, or months, for example. Conversely, operational input by the user to implement the time-period selection operation may be received at the input unit 14. Still further, before or after implementing the time-period selection operation or a portion thereof, if a time period that included a connecting clock time with the highest throughput changes, the display-control unit 166 may display on the display unit 30 information that the time period that had a good communication-environment with the server A has changed and to notify that time period. Doing so makes it possible to notify the user of a time period with a good communication environment with the CSPa as required. These settings may be preset in the content-reception device 10 by the user using the input unit 14.

(g) In the time-period selection operation of this embodiment, processes for generating and updating the time-period information at steps S12 - S15 may be implemented after connection with the communication unit 13 (Yes at step S16) has quit, at the last connecting clock time indicated by the clock-time setting in the connection-setting information. By doing so, the time-period information will be created or updated after measurement of the throughput at the last connecting clock time, so it is possible to omit the process for storing the time-period information in the memory unit 11.

(h) In the time-period selection operation of this embodiment, when the communication-control unit 161 judges that the communication unit 13 is communicating (Yes at step S4), the configuration did not measure transfer performance of the server A. However, in such a case, a configuration may be used where the transfer performance of the server A is measured by the transfer-performance measurement unit 162.

### [Explanation of Reference Numbers]

- 1: Content-distribution system
- 10: Content-reception device
- 11: Memory unit
- 12: RAM
- 13: Communication unit
- 14: Input unit
- 15: Clock-time measurement unit
- 16: Control unit
- 161: Communication-control unit
- 162: Transfer-performance measurement unit
- 163: Communication-environment judging unit
- 164: Information-control unit
- 165: Time-selection unit
- 166: Display control unit
- 20: Network
- 30: Display device
- A: Server
- a: CSP (Content Service Provider)

## Claims

1. A content-reception device (10) comprising:
a clock-time measurement unit (15) that measures a current time;
a communication unit (13) connected via a network (20) to a server (A) that operates as a content-service provider that distributes content via the network (20);
a memory unit (11) that stores connection-setting information that indicates by associating a clock-time setting that indicates a plurality of connecting clock times when the communication unit (13) is connected to the server (A), and an address of the server (A);
a communication-control unit (161) that connects the communication unit (13) to the server (A) based on the connection-setting information, and transfers predetermined data from the server (A) to the communication unit (13) at a time when any of a plurality of connecting clock times indicated by the clock-time setting matches the current time indicated by the clock-time measurement unit (15);
a transfer-performance measurement unit (162) that measures transfer performance of the server (A) when the predetermined data is transferred from the server (A) to the communication unit (13); and
a display-control unit (166) that displays a display screen based on a measurement result of the transfer-performance measurement unit (162) on a display device (30).

2. The content-reception device (10) according to claim 1, wherein a plurality of time periods that include each of the connecting clock times and the transfer performance at each of the connecting clock times are displayed on the display screen.

3. The content-reception device (10) according to claim 1 or claim 2, further comprising:
a communication-environment judging unit (163) for judging a quality of the transfer performance measured by the transfer-performance measurement unit (162).

4. The content-reception device (10) according to claim 3, wherein
the connection-setting information further indicates by associating, with the clock-time setting and the server address, a communication-environment threshold for classifying a quality of the transfer performance of the server to a plurality of communication-environment levels.

5. The content-reception device (10) according to claim 3 or claim 4, wherein
the communication-environment judging unit (163) judges whether the transfer performance at each of the connecting clock times belongs to any of the plurality of communication-environment levels based on the communication-environment threshold indicated by the connection-setting information.

6. The content-reception device (10) according to any of claims 3-5, wherein
the display screen displays a plurality of time periods that include each of the connecting clock-times and the communication-environment level at each of the connecting clock times.

7. The content-reception device (10) according to any of claims 1-6, wherein the communication-control unit (161) judges whether the communication unit (13) is communicating using the network (20), and transfers the predetermined data from the server (A) to the communication unit (13) only when it judges that communication is not being implemented using the network (20).

8. The content-reception device (10) according to any of claims 1-7, wherein
the clock-time setting includes:
a connection-starting hour that indicates a connecting clock time when the communication unit (13) is first connected to the server (A);
each time interval of a plurality of connecting clock times;
a setting period that indicates a period that the communication unit (13) is connected to the server (A) for each time interval, and
the communication-control unit (161) calculates the plurality of connecting clock times using the connection-starting hour, the time interval, and the setting period.

9. The content-reception device (10) according to any of claims 1-8, wherein throughput that indicates a data volume per unit of time transferred from the server (A) to the communication unit (13) is used in the transfer performance.

10. The content-reception device (10) according to any of claims 1-8, wherein latency that indicates a response time from a request by the communication-control unit (161) for predetermined data from the server (A) until the communication unit (13) receives the predetermined data is used in the transfer performance.
